# EUROPÄISCHE PATENTSCHRIFT

(11) **EP 1 152 133 B1**
(45) Veröffentlichungstag und Bekanntmachung des Hinweises auf die Patenterteilung: **12.07.2006**
(21) Anmeldenummer: 01110528.5
(22) Anmeldetag: 28.04.2001
(51) Int. Cl.: F01N 3/20, F02B 37/18

(54) **Vorrichtung zur Abgasreinigung**
Exhaust gas purifying apparatus
Dispositif de purification de gaz d'échappement

(30) Priorität: 03.05.2000 DE 10021421
(43) Veröffentlichungstag der Anmeldung: 07.11.2001
(73) Patentinhaber: AUDI AG, 85045 Ingolstadt (DE)
(72) Erfinder: Pfalzgraf, Bernhard, 85051 Ingolstadt (DE); Brahner, Tom, 85049 Ingolstadt (DE); Schäfer, Michael, 85057 Ingolstadt (DE); Schöneberg, Dirk, 85080 Gaimersheim (DE)

(56) Entgegenhaltungen:
- EP-A- 0 297 287
- DE-A- 19 654 026
- DE-A- 19 833 619
- FR-A- 864 658
- JP-A- 9 125 941
- US-A- 2 731 792

## Beschreibung

Die Erfindung betrifft eine Vorrichtung zur Abgasreinigung an einer Brennkraftmaschine mit einer Abgasturbine, einer Abgasreinigungseinrichtung, einer Bypassleitung, einem ersten Bypassventil und einem zweiten Bypassventil, gemäß dem Oberbegriff des Patentanspruches 1.

Eine gattungsgemäße Vorrichtung ist in der Duckschrift DE 198 33 619 A1 beschrieben. Bei dieser Vorrichtung ist in der die Abgasturbine umgehenden Bypassleitung ein Startkatalysator angeordnet. Dieser Startkatalysator kann je nach Stellung des Bypassventils alternativ zu der Abgasturbine mit Abgas durchströmt werden und daher bei Bedarf schnell aufgeheizt werden, so dass bei dieser Vorrichtung bereits frühzeitig eine effektive Abgasreinigung stattfindet.

Zudem ist aus der Druckschrift DE 196 54 026 A1, bekannt, dass stromab der Turbinen-Abströmleitung und einer die Abgasturbine umgehenden Bypassleitung ein Vorkatalysator und ein Hauptkatalysator angeordnet sind. Zum schnellen Aufheizen des Vorkatalysators ist in einem Abschnitt der Turbinen-Abströmleitung ein luftspaltisoliertes Rohr eingesetzt. Ferner ist in der Bypassleitung eine steuerbare Klappe angeordnet, die bei noch nicht betriebswarmer Brennkraftmaschine schließbar ist und das gesamte Abgas über die Turbinen-Abströmleitung lenkt und die zudem zur Ladedruckregelung der Brennkraftmaschine dient. Dies bewirkt, dass relativ schnell eine Aufheizung des Vorkatalysators und damit eine schnell einsetzende Abgasreinigung erreichbar ist.

Aufgabe der Erfindung ist es, die gattungsgemäße Vorrichtung derart weiterzuentwickeln, dass bei einer baulich kompakten Konstruktion eine zeitlich noch schneller einsetzende Abgasreinigung verwirklichbar ist und zudem eine günstige Regelung des Ladedrucks durchführbar ist.

Diese Aufgabe wird mit einer Vorrichtung gemäß dem Patentanspruch 1 gelöst. Vorteilhafte Weiterbildungen der Erfindung sind den weiteren Patentansprüchen entnehmbar.
Erfindungsgemäß wird vorgeschlagen, dass die Bypassleitung, das erste Bypassventil und das zweite Bypassventil in das Gehäuse der Abgasturbine integriert sind und dass die beiden Bypassventile über separate Stellmittel betätigt sind.
Zum einen ermöglicht diese Vorrichtung bei noch kalter Brennkraftmaschine und Abgasturbine die Abgasreinigungseinrichtung unter vollständiger Umgehung der Abgasturbine nur über die Bypassleitung zu beaufschlagen und dadurch nahezu ohne Wärmeverlust der Abgase ein noch schnelleres Aufheizen und Konvertieren der Abgase. Ferner ist somit eine baulich günstige und robuste Konstruktion im Gehäuse der Abgasturbine bzw. des Abgasturboladers erzielt.
Und zum anderen ermöglicht diese Vorrichtung über das zweite separate Stellglied für das zweite Bypassventil eine besonders feinfühlige Ladedruckregelung, während das erste Bypassventil über das erste, zum Beispiel temperaturabhängige Stellglied nur von A nach B und umgekehrt geschaltet wird.

Des weiteren wird vorgeschlagen, dass die Bypassleitung im lichten Querschnitt gleich oder nicht wesentlich kleiner als der Querschnitt der Turbinen-Abströmleitung ausgebildet ist. Dadurch werden unzulässige Abgasgegendrücke bei abgesperrter Abgasturbine ausgeschlossen und eine wirkungsvolle Abgasreinigung über den gesamten Lastbereich der Brennkraftmaschine sichergestellt.

Besonders vorteilhaft ist es ferner, wenn in Weiterbildung der Erfindung die Bypassleitung gegenüber dem Gehäuse der Abgasturbine wärmeisoliert, insbesondere luftspaltisoliert ist. Damit gelingt es, die im Abgas enthaltene Wärmeenergie nahezu verlustfrei an die Abgasreinigungseinrichtung weiterzuleiten.

Eine baulich besonders kompakte Anordnung ergibt sich, wenn bei tangentialer Einströmung des Abgases in die Abgasturbine und axialer Abströmung des Abgases durch eine Hauptleitung die Bypassleitung und die Abgasreinigungseinrichtung parallel zur Hauptleitung verlaufen. Bevorzugt können dann die Bypassleitung und die Hauptleitung noch vor dem Abströmflansch des Gehäuses der Abgasturbine zu einem einzigen Abgasstrom vereinigt sein. An diesen Abströmflansch kann dann unmittelbar die Abgasreinigungseinrichtung angeschlossen sein, die die Konvertierung der zu reinigenden Abgasbestandteile übernimmt.

Ferner kann in das Gehäuse der Abgasturbine bzw. in die Bypassleitung eine Abgasreinigungseinrichtung integriert sein, die in bekannter Weise entweder ein Dreiwege-Katalysator oder aber ein HC-Adsorber sein kann. Im letzteren Falle kann das den Durchfluss durch den HC-Adsorber steuernde Bypassventil durch entsprechende Ansteuerung über ein Motorsteuergerät auch die Adsorption und Desorption des HC-Adsorbers steuern; d. h., dass bei erschöpfter HC-Adsorptionsfähigkeit das Bypassventil geschlossen wird, bis die Temperatur des nachgeschalteten Hauptkatalysators einen definierten Wert erreicht hat und dann zur HC-Desorption wieder kurzzeitig geöffnet wird.

Die Abgasreinigungseinrichtung kann ein Dreiwege-Katalysator oder ein HC-Adsorber je nach Bauart der Brennkraftmaschine sein.

Zum noch schnelleren Ansprechen der Abgasreinigungseinrichtung könnte diese ferner elektrisch beheizbar sein.

Ein Ausführungsbeispiel der Erfindung ist im folgenden mit weiteren Einzelheiten näher erläutert. Die schematische Zeichnung zeigt in
- Fig. 1:: einen Längsschnitt durch einen an einen Abgaskrümmer einer Hubkolben-Brennkraftmaschine angeschlossenen Abgasturbolader mit einer integrierten Bypassleitung und einer ersten Abgasreinigungseinrichtung und einer an das Gehäuse des Abgasturboladers angeschlossenen zweiten Abgasreinigungseinrichtung; und
- Fig. 2: einen teilweisen Längsschnitt durch einem Abgasturbolader mit einer zweiten Bypassleitung und einem zweiten Bypassventil, wobei der Schnitt entlang den Bypassleitungen verläuft.

Der nur schematisch dargestellte Abgasturbolader 10 für eine Vierzylinder-Hubkolben-Brennkraftmaschine ist über einen Anschlussflansch 12 an einen Abgaskrümmer 14 der nicht dargestellten Brennkraftmaschine angeschlossen und setzt sich im wesentlichen aus einem Verdichter 16 und einer Abgasturbine 18 zusammen, die über eine Welle 20 miteinander verbunden sind, so dass das Turbinenrad 18a das Verdichterrad 16a antreibt. Soweit nicht beschrieben ist der Abgasturbolader 10 bekannter Bauart.

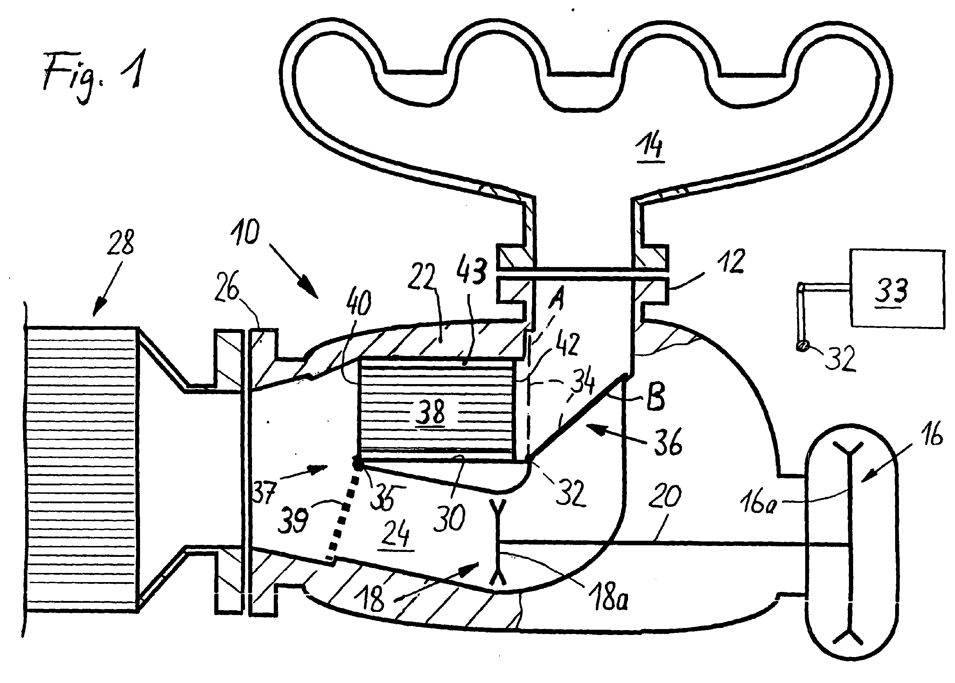

Wie an sich bekannt strömt das Abgas tangential (in der Fig. 1 nicht ersichtlich) in die Abgasturbine 18 ein und strömt im wesentlichen axial über eine Abströmleitung 24 zu einem Abströmflansch 26, an den ein Hauptkatalysator 28 (nur teilweise dargestellt) unmittelbar angeschlossen ist. Der Hauptkatalysator 28 kann ein Dreiwege-Katalysator oder ein DeNOxKatalysator sein. Aus baulichen Gründen kann jedoch auch zwischen dem Hauptkatalysator 28 und dem Abgasturbolader 10 eine Abgasleitung dazwischengeschaltet sein.

In das Gehäuse 22 der Abgasturbine 18 ist eine parallel zur Abströmleitung 24 verlaufende Bypassleitung 30 integriert, die mittels einer schwenkbar über eine Achse 32 gelagerten Klappe 34 als Teil eines ersten Bypassventils 36 mit einem entsprechenden Stellelement 33 (elektrisch oder pneumatisch) mehr oder weniger öffenbar oder schließbar ist.

Die Klappe 34 kann bevorzugt stromauf einer in die Bypassleitung 30 integrierten Abgasreinigungseinrichtung 38 und stromauf der Abgasturbine 18 angeordnet sein (ausgezogene Linie). Sie ist so regelungstechnisch und strömungsdynamisch gut beherrschbar. In der gestrichelt angedeuteten Position stromab der Abgasturbine 18 ist außerdem ein zweites Bypassventil 37 angeordnet, dessen Klappe 39 um eine Schwenkachse 35 verstellbar ist.

Die in der Bypassleitung 30 angeordnete Abgasreinigungseinrichtung 38 ist zylindrischer Gestalt und zwischen zwei stirnseitigen Trägerblechen 40,42 gehalten. Der Durchmesser der übrigen, zylinderförmigen Abgasreinigungseinrichtung 38 ist geringer als der korrespondierende Durchmesser der Bypassleitung 30, so dass dazwischen als Wärmeisolierung ein mantelförmiger Luftspalt 43 gebildet ist.

Die Bypassleitung 30 und die Abströmleitung 24 der Abgasturbine 18a sind in Abgasströmungsrichtung vor dem Abströmflansch 26 strömungsdynamisch ähnlich einem Diffusor zusammengeführt.

Die Klappe 34 des ersten Bypassventils 36 kann in eine Stellung A (gestrichelt dargestellt) gesteuert werden, in der sie die Bypassleitung 30 schließt und zugleich eine unbehinderte Anströmung der Abgasturbine 18 sicherstellt.

In der Stellung B der Klappe 34 (ausgezogene Linie) ist die Abgasturbine 18 kurzgeschlossen und es strömt das gesamte Abgas strömungsdynamisch günstig in die Abgasleitung 30 bzw. durch die Abgasreinigungseinrichtung 38.

In Zwischenstellungen der Klappe 34 kann der Ladedruck bzw. die Leistung des Verdichters 16 durch Steuern des Abgasdurchsatzes durch die Abgasturbine 18 entsprechend geregelt werden.

Das erste Bypassventil 36 wird dazu über das nicht dargestellte elektrische Motorsteuergerät und das Stellelement 33 (z. B. ein elektrischer Schrittmotor) entsprechend angesteuert. So ist bei noch kalter Brennkraftmaschine bzw. bei noch kalten Abgasreinigungseinrichtungen 38,28 die Klappe 34 in der Stellung B und es wird das gesamte Abgas durch die Abgasreinigungseinrichtung 38 geleitet, deren lichter Querschnitt etwa dem lichten Querschnitt der Abströmleitung 24 entspricht. Dies bewirkt eine schnelle Aufheizung der Abgasreinigungseinrichtung 38, insbesondere auch aufgrund deren durch den Luftspalt 43 bewirkter Wärmeisolierung gegenüber dem Gehäuse 22 des Abgasturboladers 10.

Zusätzlich wird die vom Abgas beaufschlagte Fläche durch Versperrung des Turbinenkanals verkleinert und somit weniger Wärmeenergie an das Turbinengehäuse abgegeben.

Nach dem Erreichen der Anspringtemperatur der Abgasreinigungseinrichtung 38 erwärmt sich auch relativ schnell der weitere stromab liegende Bereich der Abgasführung und damit Verbunden der Hauptkatalysator 28. Nach dessen Erreichen der Anspringtemperatur wird die Bypassleitung 30 über die Klappe 34 geschlossen und nunmehr das Abgas über die Abgasturbine 18 bzw. die Abströmleitung 24 geleitet.

Übersteigt der Ladedruck der Brennkraftmaschine einen definierten Wert, so wird wiederum die Klappe 34 zur Steuerung des Ladedruckes mehr oder minder geöffnet, so dass ein Teil der Abgasmenge über die Bypassleitung 30 bzw. die Abgasreinigungseinrichtung 38 strömt.

Über das erste Bypassventil 36 wird also ein Umschalten der Klappe 34 in die beiden Endpositionen A und B gesteuert. Die beiden Klappen 34,39 können dann über zwei separate Stellelemente 33 betätigt werden. Über das zweite Bypassventil 37 wird hingegen nur der Ladedruck der Brennkraftmaschine geregelt.

Die Abgasreinigungseinrichtung 38 kann ein sogenannter Vorkatalysator oder Startkatalysator in Form eines monolytischen Dreiwege-Katalysators oder ein HC-Adsorber sein.

Im Falle eines HC-Adsorbers kann das Bypassventil 36 bzw. die Klappe 34 ferner so angesteuert werden, dass sie bei Erschöpfung der Adsorbtionsfähigkeit des HC-Adsorbers 38 in die Stellung A gesteuert wird, so dass nur noch der Hauptkatalysator 28 mit Abgas beaufschlagt wird. Nach Erreichen dessen Betriebstemperatur kann die Klappe 34 kurzzeitig in die Stellung B oder in eine Zwischenstellung (Bypassleitung 30 teilweise offen) gesteuert werden, um eine HC-Desorbtion im HC-Adsorber 38 durchzuführen.

In nicht dargestellter Weise kann die Abgasreinigungseinrichtung 38 zusätzlich elektrisch beheizbar sein, um die Anspringtemperatur (light off) noch schneller zu erreichen. Danach wird die Beheizung abgeschaltet.

Ferner kann die Abgasreinigungseinrichtung 38 mit hoher Zelldichte (z. B. > 600 epsi - entsprechend hoher Abgasgegendruck) bei hohem Wirkungsgrad ausgelegt sein und eine schnelle, noch wirksamere Abgasreinigung bei kalter Brennkraftmaschine ermöglichen. Hat der Hauptkatalysator 28 seine light off Temperatur erreicht, so kann die Klappe 34 geschlossen oder zur Durchführung der beschriebenen HC-Adsorbtion-Desorbtion gesteuert werden.

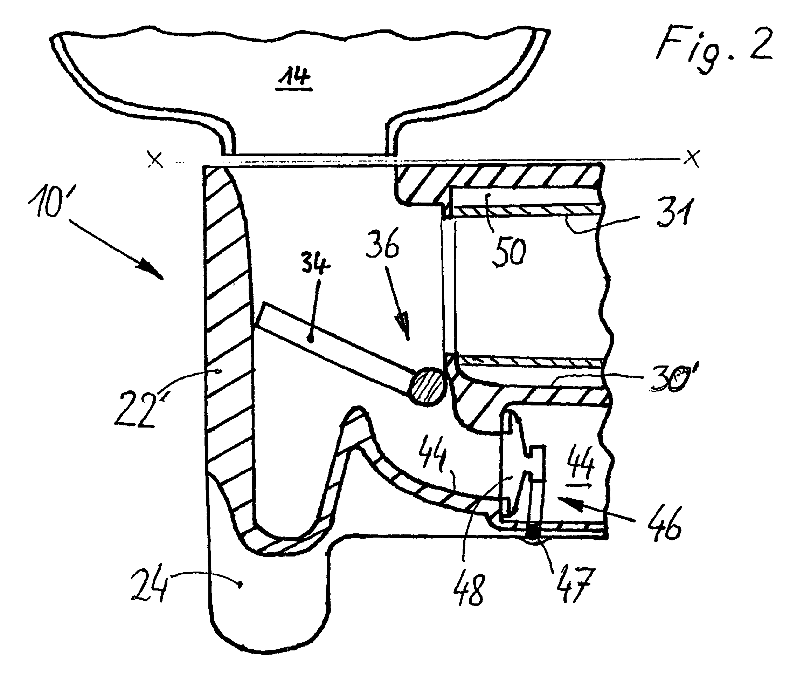

Die Fig. 2 zeigt einen Querschnitt durch einen weiteren Abgasturbolader 10', der soweit nicht beschrieben im wesentlichen der Fig. 1 entspricht.

Abweichend davon ist in das Gehäuse 22' eine zweite Bypassleitung 44 integriert, die über ein zweites Bypassventil 46 gesteuert ist. Dazu ist in der Bypassleitung 44 eine um eine Achse 47 schwenkbare Klappe 48 angeordnet, die von einem z. B. elektrischen Stellmotor (nicht dargestellt) betätigt ist.

Des weiteren ist in der ersten Bypassleitung 30' keine Abgasreinigungseinrichtung 38 vorgesehen, sondern lediglich durch Einsetzen eines dünnwandigen Rohres 31 eine Wärmeisolierung der Bypassleitung 30 durch den mantelförmigen Luftspalt 50 verwirklicht.

Der lichte Querschnitt der Bypassleitung 30 bzw. 30' entspricht etwa dem lichten Querschnitt der Abströmleitung 24 (in der Fig. 2 nicht ersichtlich). Hingegen ist der lichte Querschnitt der zweiten Bypassleitung 44 deutlich geringer und dient nur zur Steuerung des Ladedruckes der Brennkraftmaschine, während das Bypassventil 36 zum Umschalten bzw. zum Absperren entweder der Bypassleitung 30' oder der Abgasturbine 18a, bzw. der Abströmleitung 24 dient.

## Patentansprüche

1. Vorrichtung zur Abgasreinigung an einer Brennkraftmaschine mit
einer Abgasturbine (18), die stromab dem Abgasauslaß der Brennkraftmaschine in einer Abgasleitung angeordnet ist
einer ersten Abgasreinigungseinrichtung (28), die stromab der Abgasturbine (18) in der Abgasleitung angeordnet ist,
einer Bypassleitung (30,30',44), die Abgas an der Abgasturbine (18) vorbeiführt,
einem ersten Bypassventil (36) zur Steuerung der Bypassleitung (30,30',44), welches derart im Gehäuse (22) der Abgasturbine (18) angeordnet ist, dass es in der einen Endposition (B) die Abgasturbine (18) und in der anderen Endposition (A) die Bypassleitung (30,30',44) vollständig absperrt, und
einem zweiten Bypassventil (37,46) zur Steuerung der Bypassleitung (30,30',44), welches zur Ladedruckregelung der Brennkraftmaschine dient,
**dadurch gekennzeichnet, dass**
die Bypassleitung (30,30',44), das erste Bypassventil (36) und das zweite Bypassventil (37,46) in das Gehäuse (22) der Abgasturbine (18) integriert sind und die beiden Bypassventile (36,37,46) über separate Stellmittel (33) betätigt sind.

2. Vorrichtung nach Anspruch 1, **dadurch gekennzeichnet, dass** eine erste Bypassleitung (30,30') im lichten Querschnitt gleich oder nicht wesentlich kleiner als die Turbinen-Abströmleitung (24) ausgebildet ist.

3. Vorrichtung nach Anspruch 2, **dadurch gekennzeichnet, dass** eine zweite Bypassleitung (44) in das Gehäuse (22') der Abgasturbine (18) integriert ist, die von dem zweiten Bypassventil (37,46) zur Ladedruckregelung gesteuert ist.

4. Vorrichtung nach Anspruch 3, **dadurch gekennzeichnet, dass** der lichte Querschnitt der zweiten Bypassleitung (44) deutlich geringer als der Querschnitt der Turbinen-Abströmleitung (24) ausgebildet ist.

5. Vorrichtung nach einem der Ansprüche 2 bis 4, **dadurch gekennzeichnet, dass** die Abgasturbinen-Abströmleitung (24) und die erste Bypassleitung (30,30') und ggf. die zweite Bypassleitung (44) in einen gemeinsamen Abströmflansch (26) des Gehäuses (22) der Abgasturbine (18) münden.

6. Vorrichtung nach einem der Ansprüche 2 bis 5, **dadurch gekennzeichnet, dass** zumindest ein Abschnitt der ersten Bypassleitung (30,30') gegenüber dem Gehäuse (22) der Abgasturbine (18) wärmeisoliert ist.

7. Vorrichtung nach Anspruch 6, **dadurch gekennzeichnet, dass** in der ersten Bypassleitung (30,30') ein luftspaltisoliertes Rohr (31) eingesetzt ist.

8. Vorrichtung nach einem der Ansprüche 2 bis 7, **dadurch gekennzeichnet, dass** in der ersten Bypassleitung (30,30') eine zweite Abgasreinigungseinrichtung (38) angeordnet ist.

9. Vorrichtung nach Anspruch 8, **dadurch gekennzeichnet, dass** die zweite Abgasreinigungseinrichtung (38) ein Dreiwege-Katalysator ist.

10. Vorrichtung nach Anspruch 8, **dadurch gekennzeichnet, dass** die zweite Abgasreinigungseinrichtung (38) mit einer HC-Adsorbtionsbeschichtung versehen ist.

11. Vorrichtung nach der Ansprüche 7 und 8, **dadurch gekennzeichnet, dass** die zweite Abgasreinigungseinrichtung (38) und/oder das wärmeisolierte Rohr (31) bei niedriger Temperatur elektrisch beheizbar ist.

## Claims

1. Exhaust gas purifying apparatus on an internal combustion engine with
an exhaust gas turbine (18) arranged in an exhaust gas conduit downstream of the exhaust outlet of the internal combustion engine,
a first exhaust gas purifying device (28) arranged in the exhaust pipe downstream of the exhaust gas turbine (18),
a bypass conduit (30, 30', 44) which conducts exhaust gas past the exhaust gas turbine (18),
a first bypass valve (36) for controlling the bypass conduit (30, 30', 44), this valve being arranged in the casing (22) of the exhaust gas turbine (18) so that it fully shuts off the exhaust gas turbine (18) in one end position (B) and fully shuts off the bypass conduit (30, 30', 44) in the other end position (A), and
a second bypass valve (37, 46) for controlling the bypass conduit (30, 30', 44), this valve serving to regulate the supercharging pressure of the internal combustion engine,
**characterized in that**
the bypass conduit (30, 30', 44), the first bypass valve (36) and the second bypass valve (37, 46) are integrated into the casing (22) of the exhaust gas turbine (18), and the two bypass valves (36, 37, 46) are operated by separate control means (33).

2. Apparatus according to Claim 1, **characterized in that** a first bypass conduit (30, 30') is made with an internal cross-section equal to or not significantly smaller than that of the turbine outflow conduit (24).

3. Apparatus according to Claim 2, **characterized in that** a second bypass conduit (44) which is controlled by the second bypass valve (37, 46) for regulating the supercharging pressure is integrated into the casing (22') of the exhaust gas turbine (18).

4. Apparatus according to Claim 3, **characterized in that** the internal cross-section of the second bypass conduit (44) is distinctly smaller than the cross-section of the turbine outflow conduit (24).

5. Apparatus according to any one of Claims 2 to 4, **characterized in that** the exhaust gas turbine outflow conduit (24) and the first bypass conduit (30, 30'), and also the second bypass conduit (44) (if present), discharge to a common outlet flange (26) of the casing (22) of the exhaust gas turbine (18).

6. Apparatus according to any one of Claims 2 to 5, **characterized in that** at least one section of the first bypass conduit (30, 30') is heat-insulated from the casing (22) of the exhaust gas turbine (18).

7. Apparatus according to Claim 6, **characterized in that** an air-gap-insulated tube (31) is used in the first bypass conduit (30, 30').

8. Apparatus according to any one of Claims 2 to 7, **characterized in that** a second exhaust gas purifying device (38) is arranged in the first bypass conduit (30, 30').

9. Apparatus according to Claim 8, **characterized in that** the second exhaust gas purifying device (38) is a three-way catalytic converter.

10. Apparatus according to Claim 8, **characterized in that** the second exhaust gas purifying device (38) is provided with an HC-adsorption coating.

11. Apparatus according to Claims 7 and 8, **characterized in that** the second exhaust gas purifying device (38) and/or the heat-insulated tube (31) are electrically heatable at low temperature.

## Revendications

1. Dispositif d'épuration des gaz d'échappement sur un moteur à combustion interne comprenant
une turbine à gaz d'échappement (18), qui est disposée en aval de la sortie des gaz d'échappement du moteur à combustion interne dans une conduite de gaz d'échappement,
un premier système d'épuration des gaz d'échappement (28), qui est disposé en aval de la turbine à gaz d'échappement (18) dans la conduite de gaz d'échappement,
une conduite de dérivation (30, 30', 44) qui fait passer les gaz d'échappement devant la turbine à gaz d'échappement (18),
une première soupape de dérivation (36) destinée à commander la conduite de dérivation (30, 30', 44), laquelle soupape est disposées dans un boîtier (22) de la turbine à gaz d'échappement (18) de telle sorte que dans une des positions finales (B), elle bloque entièrement la turbine à gaz (18) et dans l'autre position finale (A), elle bloque entièrement la conduite de dérivation (30, 30', 44), et
une seconde soupape de dérivation (37, 46) destinée à commander la conduite de dérivation (30, 30', 44), laquelle soupape sert à régler la pression d'admission du moteur à combustion interne,
**caractérisé en ce que**
la conduite de dérivation (30, 30', 44), la première soupape de dérivation (36) et la seconde soupape de dérivation (37, 46) sont intégrées dans le boîtier (22) de la turbine à gaz d'échappement (18) et les deux soupapes de dérivation (36, 37, 46) sont actionnées par des moyens de commande (33) séparés.

2. Dispositif selon la revendication 1, **caractérisé en ce qu'**une première conduite de dérivation (30, 30') présente une section transversale intérieure identique ou non sensiblement inférieure à celle de la conduite d'évacuation de turbine (24).

3. Dispositif selon la revendication 2, **caractérisé en ce qu'**une seconde conduite de dérivation (44) est intégrée dans le boîtier (22') de la turbine à gaz (18), qui est commandée par la seconde soupape de dérivation (37, 46) pour régler la pression d'admission.

4. Dispositif selon la revendication 3, **caractérisé en ce que** la section transversale intérieure de la seconde conduite de dérivation (44) est nettement inférieure à la section transversale de la conduite à'évacuation de turbine (24).

5. Dispositif selon l'une quelconque des revendications 2 à 4, **caractérisé en ce que** la conduite d'évacuation de turbines à gaz (24) et la première conduite de dérivation (30, 30') et, le cas échéant, la seconde conduite de dérivation (44) débouchent dans une bride d'évacuation (26) commune du boîtier (22) de la turbine à gaz (18).

6. Dispositif selon l'une quelconque des revendications 2 à 5, **caractérisé en ce qu'**au moins une section de la première conduite de dérivation (30, 30') est isolée thermiquement par rapport au boîtier (22) de la turbine à gaz (18).

7. Dispositif selon la revendication 6, **caractérisé en ce qu'**un tuyau (31) isolé de l'entrefer est inséré dans la première conduite de dérivation (30, 30').

8. Dispositif selon l'une quelconque des revendications 2 à 7, **caractérisé en ce qu'**un second système d'épuration des gaz d'échappement (38) est disposé dans la première conduite de dérivation (30, 30').

9. Dispositif selon la revendication 8, **caractérisé en ce que** le second système d'épuration des gaz d'échappement (38) est un catalyseur à trois voies.

10. Dispositif selon la revendication 8, **caractérisé en ce que** le second système d'épuration des gaz d'échaprement (38) est pourvu d'un revêtement d'absorption des HC.

11. Dispositif selon l'une quelconque des revendications 7 et 8, **caractérisé en ce que** le second système d'épuration des gaz d'échappement (38) et/ou le tuyau thermiquement isolé (31) peuvent être chauffés électriquement lorsque la température est basse.
